# EUROPÄISCHE PATENTSCHRIFT

(11) **EP 1 209 041 B1**
(45) Veröffentlichungstag und Bekanntmachung des Hinweises auf die Patenterteilung: **29.11.2006**
(21) Anmeldenummer: 01126660.8
(22) Anmeldetag: 08.11.2001
(51) Int. Cl.: B60R 21/01

(54) **Vorrichtung zur Ansteuerung von Zündkreisen für Rückhaltemittel**
Method for driving ignition circuits for restraining means
Procédé de commande de circuits d'allumage pour moyens de retenue

(30) Priorität: 21.11.2000 DE 10057915
(43) Veröffentlichungstag der Anmeldung: 29.05.2002
(73) Patentinhaber: ROBERT BOSCH GMBH, 70442 Stuttgart (DE)
(72) Erfinder: Otterbach, Jens, 57482 Wenden (DE); Henne, Achim, 74343 Sachsenheim (DE); Schumacher, Hartmut, 71691 Freiberg (DE); Tschentscher, Harald, 71723 Grossbottwar (DE); Taufer, Peter, 71272 Renningen (DE); Ulmer, Michael, 72116 Moessingen (DE); Rupp, Andreas, 72770 Reutlingen (DE)

(56) Entgegenhaltungen:
- EP-A- 0 842 824
- DE-A- 4 237 404
- DE-A- 19 743 914
- DE-A- 19 813 953

## Beschreibung

### Stand der Technik

Die Erfindung geht aus von einer Vorrichtung zur Ansteuerung von Zündkreisen für Rückhaltemittel nach der Gattung des unabhängigen Patentanspruchs.

DE 197 43 914 A1, gemäss dem Oberbegriff des Anspruchs 1, lehrt die Ansteuerung von Zündelementen in Abhängigkeit von einem Zündbefehl und wenigstens einem Freigabesignal, wobei die Freigabesignale extern oder über eine externe Beschleunigungssensorik oder über einen Beschleunigungsschalter erzeugt werden können.

Zündansteuerungen, die auf integrierten Schaltungen (IC) realisiert sind, werden zum Abschalten von einzelnen Zündmittelgruppen beispielsweise der dem Beifahrer zugeordneten Zündmittel mit zusätzlicher externer Hardware ergänzt. Solche zusätzliche Hardware sind beispielsweise MOSFET-Schalter, die dann noch logisch miteinander verknüpft werden.

### Vorteile der Erfindung

Die erfindungsgemäße Vorrichtung zur Ansteuerung von Zündkreisen für Rückhaltemittel mit den Merkmalen des unabhängigen Patentanspruchs hat demgegenüber den Vorteil, dass keine zusätzliche externe Hardware notwendig ist, sondern die frei programmierbare Sperrung von Gruppen von Zündmitteln durch interne Komponenten der Zündkreisansteuerung möglich ist.

Schließlich ist es auch von Vorteil, dass die Zündkreisansteuerung Sperreingänge für das Sperren der Plus- und Minusendstufen aufweist, so dass damit alle Endstufen sperrbar sind.

Durch die in den abhängigen Ansprüchen aufgeführten Maßnahmen und Weiterbildungen sind vorteilhafte Verbesserungen der im unabhängigen Patentanspruch angegebenen Vorrichtung zur Ansteuerung von Zündkreisen für Rückhaltemittel möglich.

Besonders vorteilhaft ist, dass der Prozessor die Sperrregister auslesen kann, um eine Fehleranalyse dieser Komponenten der Zündkreisansteuerung durchzuführen.

Darüber hinaus ist es von Vorteil, dass nach dem Setzen der Sperrregister der Prozessor die Sperrregister für weitere Änderungen während des Betriebs sperrt, so dass ein gegebenenfalls defekter Prozessor keinen Einfluß durch willkürliches Setzen der Sperrregister auf die Aktivierung und Sperrung von Zündmitteln, das sind die Zündkreise, hat.

Darüber hinaus ist es von Vorteil, dass der Prozessor beim Einschalten der erfindungsgemäßen Vorrichtung die Sperreingänge, die Sperrregister und die logischen Verknüpfungen überprüft. Damit ist gewährleistet, dass die gruppenweise Sperrung von Zündmitteln richtig durchgeführt wird. Die Sperreingänge werden über das Sicherheits-IC von dem Prozessor überprüft.

### Zeichnung

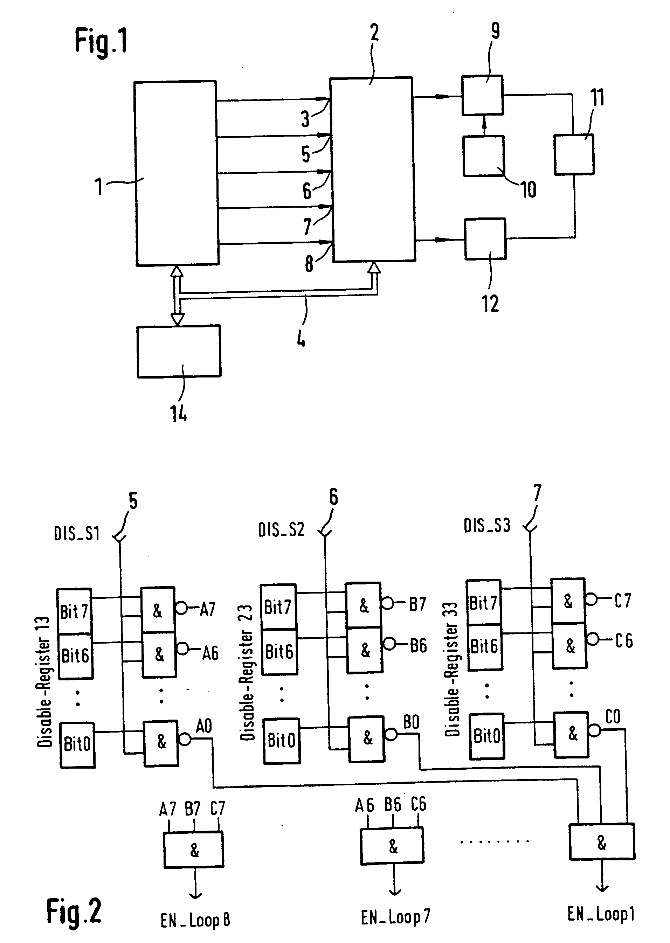

Ausführungsbeispiele der Erfindung sind in der Zeichnung dargestellt und werden in der nachfolgenden Beschreibung näher erläutert. Es zeigt Figur 1 ein Blockschaltbild der erfindungsgemäßen Vorrichtung und Figur 2 eine Schaltung der Sperrregister und Sperreingänge.

### Beschreibung

Durch die zunehmende Anzahl von Airbags in Kraftfahrzeugen wird je nach Insassenklassifizierung und Belegung von Fahrzeugsitzen eine intelligente Sperrung von einigen dieser Airbags notwendig, um Verletzungen oder ein unnötiges Auslösen von Airbags zu verhindern.

Erfindungsgemäß wird eine Vorrichtung zur Ansteuerung von Zündkreisen für Rückhaltemittel verwendet, die für die Sperrung von Gruppen von anschließbaren Zündkreisen Sperreingänge und Sperrregister aufweist. Durch logische Verknüpfung der Sperrregister und Sperreingänge ist es möglich, individuell zusammengestellte Gruppen von Zündkreisen zu sperren. Ein Prozessor, der die Zündkreisansteuerung steuert und in einem Steuergerät für Airbags untergebracht ist, weist Mittel auf, um die Sperreingänge und die Sperrregister auszulesen, um so eine Analyse durchzuführen. Dies ist insbesondere bei einer fehlerhaften Abarbeitung von Vorteil, um den Grund für den Fehler zu entdecken. Ein Sicherheits-IC setzt die Sperreingänge und der Prozessor füllt die Sperrregister direkt nach dem Einschalten und dem Durchführen der einzelnen IC-Tests. Danach sperrt der Prozessor die Sperrregister, um eine spätere Änderung durch beispielsweise einen fehlerhaften Prozessor zu verhindern. Die Zündkreisansteuerung, die auf einem integrierten Schaltkreis realisiert ist, weist neben den Sperreingängen, die für die Sperrung der individuell zusammengestellten Gruppen von Zündkreisen vorgesehen sind, auch noch Sperreingänge für die Plus- und Minusendstufe auf, um so letztlich die gesamten Endstufen sperren zu können.

In Figur 1 ist als Blockschaltbild die erfindungsgemäße Vorrichtung zur Ansteuerung von Zündkreisen für Rückhaltemittel dargestellt. Ein Sicherheits-IC 1 ist über einen ersten Datenausgang an einen Sperreingang für die Plusendstufe 9 einer Zündkreisansteuerung 2 angeschlossen. Über seinen zweiten, dritten und vierten Datenausgang ist der Sicherheits-IC 1 jeweils mit Sperreingängen 5, 6 und 7 verbunden, die zur individuellen Sperrung von verschiedenen Gruppen von Zündkreisen vorgesehen sind. Über den fünften Datenausgang ist der Sicherheits-IC 1 an den Sperreingang für die Minusendstufen angeschlossen. Über eine Datenverbindung 4 ist der Sicherheits-IC 1 über seinen Datenein-/-ausgang an einen Datenein-/-ausgang eines Prozessors 14 sowie einen Datenein-/-ausgang der Zündkreisansteuerung 2 angeschlossen. Die Plusendstufe 9 ist zur Spannungsversorgung mit einer Energiereserve 10 verbunden. Die Energiereserve 10 weist im wesentlichen einen Kondensator zu Zwischenspeicherung von elektrischer Energie auf.

Über einen ersten Datenausgang ist die Zündkreisansteuerung 2 an die Plusendstufe 9 angeschlossen. Über ihren zweiten Datenausgang ist die Zündkreisansteuerung 2 an die Minusendstufe 12 angeschlossen. Die Plusendstufe 9 und die Minusendstufe 12 sind über ein Zündmittel 11 miteinander verbunden. Beispielhaft ist hier nur ein Zündmittel 11 dargestellt und dementsprechend auch nur eine Plusendstufe 9 und eine Minusendstufe 12, es sind jedoch mehrere Zündkreise durch die Zündkreisansteuerung 2 steuerbar. In einem solchen Fall sind dann entsprechend mehr Plus- und Minusendstufen vorhanden.

Nach dem Einschalten eines Fahrzeugs, in dem sich die erfindungsgemäße Vorrichtung befindet, führt der Prozessor 14 IC-Tests an angeschlossenen ICs durch. Dazu zählt auch die Zündkreisansteuerung 2. Über die Datenverbindung 4 werden Tests durchgeführt, um die Funktionalität der Zündkreisansteuerung 2 zu verifizieren. Danach erhält der Sicherheits-IC 1 von verschiedenen Sensoren, die hier nicht dargestellt sind, Daten über die Besetzung der Fahrzeugsitze. Diese Sensordaten werden auch vom Prozessor 14 erfaßt. Dabei wird unterschieden, ob erwachsene Personen oder Kinder oder Gegenstände sich auf den einzelnen Fahrzeugsitzen befinden. Insbesondere wird dabei auch untersucht, ob ein Kindersitz sich auf einem Fahrzeugsitz befindet. Bei Kindern, Fahrzeugsitzen und Gegenständen oder unbesetzten Fahrzeugsitzen soll bei einem Zusammenstoß kein Rückhaltemittel, also ein Airbag, ausgelöst werden, um Verletzungen und ein unnötiges Aktivieren der Rückhaltemittel zu vermeiden. In diesem Fall sind diese entsprechenden Zündkreise zu sperren. In Abhängigkeit von diesen Daten wird nun der Sicherheits-IC 1 durch die Zündkreisansteuerung 2 eine entsprechende Sperrung veranlassen. Dazu setzt der Sicherheits-IC 1 die Sperreingänge 5, 6 und 7, um die zugeordneten Zündmittelgruppen zu sperren. Durch das Sicherheits-IC 1 ist gewährleistet, dass die Sensordaten unabhängig von dem Prozessor 14 auf Plausibilität hin untersucht werden, so dass eine Fehlauslösung von Rückhaltemitteln mit hoher Wahrscheinlichkeit unterbleibt. Das Sicherheits-IC 1 weist dazu eigene Hardware auf, die eine Überprüfung der Sensordaten auf die Kriterien auslöserelevant oder nicht auslöserelevant hin ermöglicht. Es wird dabei insbesondere ein Schwellwertvergleich durchgeführt, während der Prozessor 14 einen kompletten Auslösealgorithmus zur Auswertung der Sensordaten durchrechnet.

In Figur 2 ist dargestellt, wie die Sperreingänge 5, 6 und 7 mit den Sperrregistern 13, 23 und 33, hier Disable Register genannt, logisch verknüpft sind, um entsprechende Gruppen von Zündkreisen zu sperren. Die Sperrregister 13, 23 und 33 haben eine Breite von 8 Bit und jedes Bit ist an einem Eingang eines NAND-Gatters angeschlossen. Der zweite Eingang der NAND-Gatter wird durch einen jeweiligen Sperreingang belegt. An den Ausgängen der NAND-Gatter liegen dann die Verknüpfungsergebnisse vor. Diese Verknüpfungsergebnisse sind hier für das Disable-Register 13 mit A7 bis A0 bei dem zweiten Disable-Register 23 von B7 bis B0 und bei dem dritten Disable-Register 33 von C7 bis C0 benannt. Die Ausgangssignale der NAND-Gatter der entsprechenden Bits werden dann mit einem Und-Gatter miteinander verknüpft. D.h. also A0, B0 und C0 werden zusammen in einem Und-Gatter verknüpft und ergeben das Ergebnis für eine Plusendstufe, ob also eine Sperrung vorliegen soll oder nicht. Entsprechend bilden die Ausgangssignale A6, B6 und C6 die Eingänge eines Und-Gatters und auch die Ausgänge A7, B7 und C7 sind an den Eingängen eines Und-Gatters geschaltet. Eine logische 1 in einem Disable-Registerbit bewirkt, dass der Ausgang des angeschlossenen NAND-Gatters den invertierten Logikzustand eines Sperreingangs 5, 6 oder 7 wiedergibt. Das NAND-Gatter wird also transparent für den jeweiligen Sperreingang. Die Ausgänge der NAND-Gatter sind wie oben dargestellt auf 8 Und-Gatter geführt. Deren Ausgänge EN_loop1 bis EN_loop8 gehen auf die zugehörigen Ansteuerschaltungen der Plusendstufen und führen zu einer entsprechenden Sperrung.

Die Zündkreise werden jeweils über Plusendstufen gespeist, so dass eine Sperrung in einfacher Weise über die Plusendstufen erfolgen kann. Damit ist klar, dass jeder der Sperreingänge 5, 6 und 7 eine individuell konfigurierbare Gruppe von bis zu 8 Zündkreisen sperren kann. Eine logisch 0 in einem Disable-Registerbit bewirkt, dass der Ausgang des angeschlossenen NAND-Gatters immer logisch 1 ist unabhängig vom Zustand des Sperreingangs.

## Patentansprüche

1. Vorrichtung zur Ansteuerung von Zündkreisen für Rückhaltemittel in einem Kraftfahrzeug, wobei ein Prozessor (14) zur Ansteuerung der Rückhaltemittel mit einer Zündkreisansteuerung (2) verbunden ist, wobei die Zündkreisansteuerung (2) mit wenigstens einem Zündmittel (11) und entsprechenden Endstufen (9, 12) verbindbar ist, wobei der Prozessor (14) bei einem Aufprall des Kraftfahrzeugs die Endstufen (9, 12) freigibt, wobei ein Sicherheits-IC (1) zur Freigabe des wenigstens einem Zündmittel (11) bei einem Aufprall mit der Zündkreisansteuerung (2) verbunden ist, wobei der Sicherheits-IC (1) Mittel zur Aufprallerkennung aufweist, **dadurch gekennzeichnet, dass** die Zündkreisansteuerung (2) zur Sperrung von Gruppen von anschließbaren Zündkreisen, die die Endstufen (9, 12) und das wenigstens eine Zündmittel (11) aufweisen, Sperreingänge (5-7) und Sperrregister (13, 23, 33) aufweist, wobei nach dem Einschalten der Vorrichtung in Abhängigkeit von der Besetzung der Kraftfahrzeugsitze der Prozessor (14) die Sperrregister (13, 23, 33) setzt und der Sicherheits-IC (1) die Sperreingänge (5-7) beschaltet, und dass die Zündkreisansteuerung (2) Daten der Sperreingänge (5 bis 7) und der Sperrregister (13, 23, 33) logisch miteinander verknüpft, um individuelle Gruppen von Zündkreisen zu sperren, dass die Zündkreisansteuerung (2) jeweils einen Sperreingang (3, 8) für die Plus- und Minusendstufen (9, 12) aufweist.

2. Vorrichtung nach Anspruch 1, **dadurch gekennzeichnet, dass** die Sperreingänge (5-7) und die Sperrregister (13, 23, 33) für den Prozessor (14) lesbar sind.

3. Vorrichtung nach Anspruch 1 oder 2, **dadurch gekennzeichnet, dass** der Prozessor (14) die Sperrregister (13, 23, 33) nach dem Setzen sperrt.

4. Vorrichtung nach einem der Ansprüche 1 bis 3, **dadurch gekennzeichnet, dass** die Sperrregister (13, 23, 33) die Sperreingänge (5 bis 7) und die logische Verknüpfung durch den Prozessor (14) nach dem Einschalten überprüfbar sind.

## Claims

1. Apparatus for driving firing circuits for restraining means in a motor vehicle, a processor (14) for driving the restraining means being connected to a firing circuit driving system (2), the firing circuit driving system (2) being able to be connected to at least one firing means (11) and corresponding output stages (9, 12), the processor (14) enabling the output stages (9, 12) in the event of an impact of the motor vehicle, a safety IC (1) for enabling the at least one firing means (11) in the event of an impact being connected to the firing circuit driving system (2), the safety IC (1) having means for detecting an impact, **characterized in that** the firing circuit driving system (2) has disabling inputs (5 - 7) and disabling registers (13, 23, 33) for disabling groups of firing circuits which can be connected and have the output stages (9, 12) and the at least one firing means (11), the processor (14) setting the disabling registers (13, 23, 33), after the apparatus has been switched on, on the basis of the occupation of the motor vehicle seats and the safety IC (1) connecting the disabling inputs (5 - 7), and **in that** the firing circuit driving system (2) logically combines data from the disabling inputs (5 to 7) and the disabling registers (13, 23, 33) in order to disable individual groups of firing circuits, and **in that** the firing circuit driving system (2) has a respective disabling input (3, 8) for the positive and negative output stages (9, 12).

2. Apparatus according to Claim 1, **characterized in that** the disabling inputs (5 - 7) and the disabling registers (13, 23, 33) can be read by the processor (14).

3. Apparatus according to Claim 1 or 2, **characterized in that** the processor (14) disables the disabling registers (13, 23, 33) after they have been set.

4. Apparatus according to one of Claims 1 to 3, **characterized in that** the disabling registers (13, 23, 33), the disabling inputs (5 to 7) and the logic combination can be checked by the processor (14) after being switched on.

## Revendications

1. Dispositif de commande d'un circuit d'allumage pour des moyens de retenue montés dans un véhicule automobile, comprenant
- qui comprend un processeur (14) pour commander les moyens de retenue en étant relié à une commande de circuit d'allumage (2) qui peut être reliée à au moins un moyen d'allumage (11) et à des étages terminaux (9, 12) correspondants, de sorte que le processeur (14), en cas de collision du véhicule, libère les étages terminaux (9, 12),
- un circuit intégré de sécurité (1), relié à la commande de circuit d'allumage (2) pour libérer en cas de collision l'au moins un moyen d'allumage (11), ce circuit présentant des moyens pour détecter la collision,
**caractérisé en ce que**
- la commande de circuit d'allumage (2) présente des entrées de blocage (5 à 7) et des enregistreurs de blocage (13, 23, 33), pour bloquer des groupes de circuits d'allumage pouvant être raccordés et présentant les étages terminaux (9, 12) et l'au moins un moyen d'allumage (11),
- après mise en action du dispositif, le processeur (14) positionne les enregistreurs de blocage (13, 23, 33) en fonction de l'occupation des sièges du véhicule, et le circuit intégré de sécurité (1) connecte les entrées de blocage (5 à 7),
- la commande de circuit d'allumage (2) connecte logiquement les données des entrées de blocage (5 à 7) et des enregistreurs (13, 23, 33) pour bloquer des groupes individuels de circuits d'allumage,
- la commande de circuit d'allumage (2) présente chaque fois une entrée de blocage (3, 8) pour les étages terminaux positifs et négatifs (9, 12).

2. Dispositif de commande selon la revendication 1,
**caractérisé en ce que**
les entrées de blocage (5 à 7) et les enregistreurs de blocage (13, 23, 33) peuvent être lus par le processeur (14).

3. Dispositif de commande selon la revendication 1 ou 2,
**caractérisé en ce que**
le processeur (14) bloque les enregistreurs de blocage après le positionnement.

4. Dispositif de commande selon une des revendications 1 à 3,
**caractérisé en ce que**
les enregistreurs de blocage (13, 23, 33), les entrées de blocage (5 à 7) et la connexion logique peuvent être contrôlés par le processeur après la mise en action.
